# EUROPEAN PATENT SPECIFICATION

(11) **EP 3 874 444 B1**
(45) Date of publication and mention of the grant of the patent: **05.08.2026**
(21) Application number: 19879437.2
(22) Date of filing: 28.10.2019
(51) Int. Cl.: G06N 3/0985, G06N 3/09, G06N 3/0464, G06N 3/045, G06T 7/00, G06Q 10/06, G06Q 10/04, G06N 3/08, G01S 17/89, G01S 17/42, G01S 17/88, G06Q 50/02, A01G 23/00

(54) **FOREST STAND TARGET ATTRIBUTE PREDICTION**
VORHERSAGE VON ZIELATTRIBUTEN FÜR WALDBESTÄNDE
PRÉDICTION D'ATTRIBUT CIBLE DE PEUPLEMENT FORESTIER

(30) Priority: 02.11.2018 FI 20185930
(43) Date of publication of application: 08.09.2021
(73) Proprietor: Collectivecrunch Oy, 02150 Espoo (FI)
(72) Inventor: DANZL, Christof, 10439 Berlin (DE); LIPPONEN, Jarkko, 02230 Espoo (FI); VISANKO, Tuomo, 02130 Espoo (FI)
(74) Representative: Papula Oy
(86) International application number: PCT/FI2019/050767
(87) International publication number: WO 2020/089524

(56) References cited:
- US-A1- 2008 046 184
- ALINYAPARECIDA DOS REIS ET AL: "Spatial prediction of basal area and volume in stands using Landsat TM data: an assessment of prediction methods", NEW ZEALAND JOURNAL OF FORESTRY SCIENCE, BIOMED CENTRAL LTD, LONDON, UK, vol. 48, no. 1, 16 January 2018 (2018-01-16), pages 1 - 17, XP021252834, DOI: 10.1186/S40490-017-0108-0
- BLACKARD ET AL: "Mapping U.S. forest biomass using nationwide forest inventory data and moderate resolution information", REMOTE SENSING OF ENVIRONMENT, ELSEVIER, XX, vol. 112, no. 4, 7 November 2007 (2007-11-07), pages 1658 - 1677, XP022527063, ISSN: 0034-4257, DOI: 10.1016/J.RSE.2007.08.021
- MATASCI GIONA ET AL: "Large-area mapping of Canadian boreal forest cover, height, biomass and other structural attributes using Landsat composites and lidar plots", REMOTE SENSING OF ENVIRONMENT, ELSEVIER, XX, vol. 209, 19 March 2018 (2018-03-19), pages 90 - 106, XP085366726, ISSN: 0034-4257, DOI: 10.1016/J.RSE.2017.12.020
- STOJANOVA, D ET AL.: "Estimating the risk of fire outbreaks in the natural environment", DATA MINING AND KNOWLEDGE DISCOVERY, vol. 24, 2012, pages 411 - 442, XP035000085, DOI: 10.1007/s10618-011-0213-2
- LUTHER, JE ET AL.: "Predicting wood quantity and quality attributes of balsam fir and black spruce using airborne laser scanner data", FORESTRY: AN INTERNATIONAL JOURNAL OF FOREST RESEARCH, vol. 87, no. 2, April 2014 (2014-04-01), pages 313 - 326, XP055703660
- WILLEN, E: "Big Databases in forest planning and operations - new national lidar campaign in Sweden", 19 June 2018 (2018-06-19), Oscarsborg, XP055703661, Retrieved from the Internet <URL:https://nordicforestresearch.org/wp-content/uploads/2018/09/Big-Databases-in-forest-planning-and-operations_Erik-Willen.pdf> [retrieved on 20200305]

## Description

### TECHNICAL FIELD

The present disclosure relates to the field of data processing in general, and to a solution for predicting a forest stand target attribute.

### BACKGROUND

The prediction of forest attributes on a large scale is an important aspect in managing forest stands. The current focus of so-called national forest inventories (NFI) are the volume by tree species, the total volume/biomass and the average dimensions (height, diameter) of trees.

ALINYAPARECIDA DOS REIS ET AL: "Spatial prediction of basal area and volume in stands using Landsat TM data: an assessment of prediction methods", NEW ZEALAND JOURNAL OF FORESTRY SCIENCE, BIOMED CENTRAL LTD, LONDON, UK, vol. 48, no. 1, 16 January 2018 (2018-01-16), pages 1-17, DOI: 10.1186/540490-017-0108-0 discloses a method to estimate and map the basal area and volume of Eucalyptus stands through the integration of forest inventory, remote sensing, parametric, and nonparametric methods of spatial prediction. BLACKARD ET AL: "Mapping U.S. forest biomass using nationwide forest inventory data and moderate resolution information",REMOTE SENSING OF ENVIRONMENT, ELSEVIER, XX, vol. 112, no. 4, 7 November 2007 (2007-11-07), pages 1658-1677,ISSN: 0034-4257, DOI: 10.1016/J.RSE.2007.08.021 discloses the assembling of a nationwide geospatial dataset of layers of predictor variables for use in biomass models.

MATASCI GIONA ET AL: "Large-area mapping of Canadian boreal forest cover, height, biomass and other structural attributes using Landsat composites and lidar plots", REMOTE SENSING OF ENVIRONMENT, ELSEVIER, XX, vol. 209, 19 March 2018 (2018-03-19), pages 90-106, ISSN: 0034-4257, DOI: 10.1016/J.RSE.2017.12.020 discloses a methodological framework to combine wall-to-wall Landsat surface reflectance composites, forest change information, and descriptors of topography/location to map forest attributes (including canopy cover, height, aboveground biomass and stem volume) longitudinally across a continent.

One method used in existing inventories are interpolations of field measurements in sample plots using the K-Nearest-Neighbor (kNN) method applied to satellite images or airborne laser scans (ALS). Some inventories are augmented with mathematical growth models to adjust the volume increase since the ALS measurement.

Forest owners and the wood processing industry have a natural interest to know the quantitative and qualitative attributes of standing trees in the forest stands they own or intend to purchase. However, it is very difficult and expensive to measure these attributes for large forest areas manually, or even with the support of drones.

For this reason, estimations are commonly used instead to cover large forest areas. However, established methods for estimations are often inaccurate, incomplete, or do not include certain attributes of interest. Established methods, for example, the ALS, are good for estimating height of trees over large areas but are not so useful for detecting tree species. Likewise, estimations on satellite images alone suffer from a lack of spatial resolution.

Therefore, there is still a need for a solution that enables a more accurate estimation or prediction of characteristics of a forest stand or stands.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter as defined by the appended claims.

It is an object of the present disclosure to provide a technical solution for enabling predictions of one or more forest stand target attributes for one or more forest stands. The object above is achieved by the features of the independent claims in the appended claims. Further embodiments and examples are apparent from the dependent claims, the detailed description and the accompanying drawings.

According to a first aspect, there is provided a computer-implemented method for predicting a forest stand target attribute. The method comprises obtaining direct indicator data about forest stands, the direct indicator data comprising optical satellite data and at least one of airborne laser scanning data or radar satellite data; obtaining indirect indicator data about the forest stands, the indirect indicator data providing data that helps to explain growth of trees in the forest stands, the indirect indicator data comprising at least one of silvicultural data, geographical data, geological data, historical weather and climate data; obtaining empirical measurement data about the forest stands, the empirical measurement data comprising harvester machine data from harvester operations comprising location information about individual trees; dividing the forest stands into a grid composed of geographically non-overlapping cells, each cell being bound by geographic coordinates, the grid comprising a plurality of grid layers; determining values of a forest stand target attribute measurable based on the empirical measurement data for a first set of cells of a grid layer based on the empirical measurement data, the determining comprising attributing empirical measurement data associated with a specific geographical location to a respective cell covering the specific geographical location, wherein the forest stand target attribute comprises one of: distribution of tree species, distribution of wood classes, distribution of log classes, saw log quality, pulp wood quality, and forest growth rate; determining values of a plurality of input variables for a second set of cells of the remaining grid layers based on the direct indicator data and the indirect indicator data so that cells of each remaining grid layer comprise values associated with the corresponding same input variable, the second set of cells geographically corresponding to the first set of cells; converting the grid layers to grid-specific feature vectors so that each grid-specific feature vector corresponds to a single cell of the grid; applying a non-linear machine learning algorithm for the forest stand target attribute to generate a trained model for the forest stand target attribute based on the grid-specific feature vectors; determining values of the plurality of input variables for a given cell of the remaining grid layers based on the direct indicator data and the indirect indicator data; constructing an input feature vector for the given cell based on the values of the plurality of input variables for the given cell; and predicting the value of the forest stand target attribute for the given cell based on the input feature vector and the trained model for the forest stand target attribute. This enables generation of a model for the forest stand attribute covering a large geographical area based on a limited set of initial forest stand target attribute values. This also enables users to get forest stand target attribute estimates for a particular location, and offers the flexibility of aggregating such estimates to regions of arbitrary size and shape. Good estimations of forest stand attributes may provide decision support, for example, for planning harvest operations, selling/buying forest assets, and selling/buying wood from forest stands. This also enables determining values of an input variable for a cell where empirical measurement data is available for a very specific geographical location, thereby increasing the correlation with other input variables for this cell and hence the overall accuracy of the model and predictions. Further, the direct indicator data provides input variables for estimating the inventory of a forest stand and enables prediction of species distribution, total volume/biomass, and log dimensions. Further, the indirect indicator data provides input variables for estimating wood quality and enables prediction of wood class and saw log quality. The indirect indicator data also provides input variables for estimating the species distribution and growth rate and therefore enables more accurate forest inventory estimates, especially when the age of the forest stand is known. Further, the use of empirical measurement data collected, for example, automatically during harvest operations helps to save costs compared to the labor-intensive method of field measurements in forests.

In an implementation form of the first aspect, the method further comprises predicting the value of the forest stand target attribute for each cell of a forest stand; and calculating a forest stand-level value of the forest stand target attribute based on the values of the forest stand target attribute for all cells of the forest stand. This enables users to get forest attribute estimates for a particular stand or group of stands, and to locate stands matching a wide range of search criteria (for example, geographic region, quantity per species, quality parameters, growth rate or any combination of these).

In an implementation form of the first aspect, a cell comprises a plurality of sub-cells, and the method further comprises calculating a value associated with an input variable for a cell based on values associated with an input variable for the plurality of sub-cells of the cell. This enables determining a single value of an input variable for a cell based on a set of values associated with the sub-cells, so that input data with a higher spatial resolution (such as remote sensing data) can be combined with low-resolution input variables to produce more accurate estimations.

In a further implementation form of the first aspect, calculating the value associated with the input variable by using a convolutional neural network, statistical aggregation or filters combined with aggregation. By using, for example, a convolutional neural network higher overall accuracy at the cost of additional computation time may be provided.

In a further implementation form of the first aspect, the indirect indicator data comprises time series for each of N input variables for a cell, and the method further comprises: calculating an optimal aggregation function for computing a single derived input variable value from a subset of up to N input variables from time series of these input variables for each cell, so that the aggregation function maximizes a correlation between the single derived input variable and the forest stand target attribute; and applying the aggregation function to all cells of the grid for computing a derived input grid layer. This enables assigning specific values of an input variable for a cell of a grid layer even if the input variable is a time series input variable.

In a further implementation form of the first aspect, the method further comprises transforming forest stand level empirical measurement data to grid-level estimates of the forest stand level empirical measurement data. This enables determining values of an input variable for individual cells even if the forest stand level empirical measurement data covers a large geographical area.

In a further implementation form of the first aspect, the method further comprises predicting, for the forest stands, values of at least one forest stand target attributes based on the trained models for the forest stand target attributes; and applying at least one search criterion to find at least one forest stand matching the at least one search criterion. This enables a solution with which it is possible to locate forest stands matching a wide range of search criteria (for example, geographic region, quantity per species, quality parameters, growth rate or any combination of these). In a further implementation form of the first or second aspect, the direct indicator data comprises at least one of forest inventory estimates, field measurement data, hyperspectral satellite data, and aerial image data The direct indicator data provides input variables for estimating the inventory of a forest stand and enables prediction of species distribution, total volume/biomass, and log dimensions.

In a further implementation form of the first aspect, the empirical measurement data comprises at least one of X-ray data, saw mill data, pulp mill data and integrated mills data. The use of quality measurements from wood-processing mills enables the cost-efficient prediction of wood quality attributes, which would be more difficult, inaccurate and expensive when done via field measurements.

In a further implementation form of the first aspect, the forest stand target attribute comprises one of: volume per hectare, basal area, average diameter, average height, average diameter at breast height, average volume per stem, number of stems per hectare, recommended harvest operation, risk of forest damages by fire, risk of forest damages by storm, and risk of forest damages by pests. Knowledge of these forest stand attributes provides guidance for buyers of standing stock and enables objective valuation of forest stands and their wood inventory.

According to a second aspect, there is provided a system for predicting a forest stand target attribute. The system comprises at least one processing unit and at least one memory. The at least one memory stores program instructions that, when executed by the at least one processing unit, cause the system to obtain direct indicator data about forest stands, the direct indicator data comprising optical satellite data and at least one of airborne laser scanning data or radar satellite data; obtain indirect indicator data about the forest stands, the indirect indicator data providing data that helps to explain growth of trees in the forest stands, the indirect indicator data comprising at least one of silvicultural data, geographical data, geological data, historical weather and climate data; obtain empirical measurement data about the forest stands, the empirical measurement data comprising harvester machine data from harvester operations comprising location information about individual trees; divide the forest stands into a grid composed of geographically non-overlapping cells, each cell being bound by geographic coordinates, the grid comprising a plurality of grid layers; determine values of a forest stand target attribute measurable based on the empirical measurement data for a first set of cells of a grid layer based on the empirical measurement data, the determining comprising attributing empirical measurement data associated with a specific geographical location to a respective cell covering the specific geographical location, wherein the forest stand target attribute comprises one of: distribution of tree species, distribution of wood classes, distribution of log classes, saw log quality, pulp wood quality, and forest growth rate; determine values of a plurality of input variables for a second set of cells of the remaining grid layers based on the direct indicator data and the indirect indicator data so that cells of each remaining grid layer comprise values associated with the corresponding same input variable, the second set of cells geographically corresponding to the first set of cells; convert the grid layers to grid-specific feature vectors so that each grid-specific feature vector corresponds to a single cell of the grid; applying a non-linear machine learning algorithm for the forest stand target attribute to generate a trained model for the forest stand target attribute based on the grid-specific feature vectors; determine values of the plurality of input variables for a given cell of the remaining grid layers based on the direct indicator data and the indirect indicator data; construct an input feature vector for the given cell based on the values of the plurality of input variables for the given cell; and predict the value of the forest stand target attribute for the given cell based on the input feature vector and the trained model for the forest stand target attribute.

In an implementation form of the second aspect, the at least one memory stores program instructions that, when executed by the at least one processing unit, cause the system to predict the value of the forest stand target attribute for each cell of a forest stand; and calculate a forest stand-level value of the forest stand target attribute based on the values of the forest stand target attribute for all cells of the forest stand.

In an implementation form of the second aspect, a cell comprises a plurality of sub-cells, and wherein the at least one memory stores program instructions that, when executed by the at least one processing unit, cause the system to calculate a value associated with an input variable for a cell based on values associated with an input variable for the plurality of sub-cells of the cell.

In a further implementation form of the second aspect, calculating the value associated with the input variable by using a convolutional neural network, statistical aggregation or filters combined with aggregation.

In a further implementation form of the second aspect, wherein the indirect indicator data comprises time series for each of N input variables for a cell, and wherein the at least one memory stores program instructions that, when executed by the at least one processing unit, cause the system to: calculate an optimal aggregation function for computing a single derived input variable value from a subset of up to N input variables from time series of these input variables for each cell, so that the aggregation function maximizes a correlation between the single derived input variable and the forest stand target attribute; and apply the aggregation function to all cells of the grid for computing a derived input grid layer.

In a further implementation form of the second aspect, the at least one memory stores program instructions that, when executed by the at least one processing unit, cause the system to transform forest stand level empirical measurement data to grid-level estimates of the forest stand level empirical measurement data.

In a further implementation form of the second aspect, the at least one memory stores program instructions that, when executed by the at least one processing unit, cause the system to predict, for the forest stands, values of at least one forest stand target attributes based on the trained models for the forest stand target attributes; and apply at least one search criterion to find at least one forest stand matching the at least one search criterion.

In a further implementation form of the second aspect, the direct indicator data comprises at least one of forest inventory estimates, field measurement data, hyperspectral satellite data, and aerial image data.

In a further implementation form of the second aspect, the empirical measurement data comprises at least one of X-ray data, saw mill data, pulp mill data and integrated mills data.

In a further implementation form of the second aspect, the forest stand target attribute comprises one of: volume per hectare, basal area, average diameter, average diameter at breast height, average height, average volume per stem, number of stems per hectare, recommended harvest operation, risk of forest damages by fire, risk of forest damages by storm, and risk of forest damages by pests.

According to a third aspect, there is provided a computer program comprising program code which, when executed by at least one processor, performs the method of the first or second aspect.

According to a fourth aspect, there is provided a computer-readable medium comprising a computer program comprising program code which, when executed by at least one processor, performs the method of the first or second aspect.

According to a fifth aspect, there is provided a system for predicting a forest stand target attribute. The system comprises means for: obtaining direct indicator data about forest stands, the direct indicator data comprising optical satellite data and at least one of airborne laser scanning data or radar satellite data; obtaining indirect indicator data about the forest stands, the indirect indicator data providing data that helps to explain growth of trees in the forest stands, the indirect indicator data comprising at least one of silvicultural data, geographical data, geological data, historical weather and climate data; obtaining empirical measurement data about the forest stands, the empirical measurement data comprising harvester machine data from harvester operations comprising location information about individual trees; dividing the forest stands into a grid composed of geographically non-overlapping cells, each cell being bound by geographic coordinates, the grid comprising a plurality of grid layers; determining values of a forest stand target attribute measurable based on the empirical measurement data for a first set of cells of a grid layer based on the empirical measurement data, the determining comprising attributing empirical measurement data associated with a specific geographical location to a respective cell covering the specific geographical location, wherein the forest stand target attribute comprises one of: distribution of tree species, distribution of wood classes, distribution of log classes, saw log quality, pulp wood quality, and forest growth rate; determining values of a plurality of input variables for a second set of cells of the remaining grid layers based on the direct indicator data and the indirect indicator data so that cells of each remaining grid layer comprise values associated with the corresponding same input variable, the second set of cells geographically corresponding to the first set of cells; converting the grid layers to grid-specific feature vectors so that each grid-specific feature vector corresponds to a single cell of the grid; applying a non-linear machine learning algorithm for the forest stand target attribute to generate a trained model for the forest stand target attribute based on the grid-specific feature vectors; determining values of the plurality of input variables for a given cell of the remaining grid layers based on the direct indicator data and the indirect indicator data; constructing an input feature vector for the given cell based on the values of the plurality of input variables for the given cell; and predicting the value of the forest stand target attribute for the given cell based on the input feature vector and the trained model for the forest stand target attribute.

In a further implementation form of the fifth aspect, the means comprises at least one processor and at least one memory including computer program code, the at least one memory and computer program code configured to, with the at least one processor, cause the performance of the system.

Other features and advantages of the present invention will be apparent upon reading the following detailed description and reviewing the accompanying drawings.

### BRIEF DESCRIPTION OF THE DRAWINGS

The essence of the present invention is explained below with reference to the accompanying drawings in which:
FIG. 1A illustrates a flow chart of a method for training a model for predicting a forest stand target attribute according to an embodiment.
FIG. 1B illustrates an embodiment in which a trained model for the forest stand target attribute is used to predict the value of the forest stand target attribute for one or more cells or one or more forest stands.
FIG. 2 illustrates an overview of different input variables and predicted forest stand target attributes and their relations according to an embodiment.
FIG. 3 illustrates a block diagram of a forest stand target attribute prediction system according to an embodiment.
FIG. 4A illustrates the concept of a grid and grid cells according to an embodiment.
FIG. 4B illustrates transformation of the grid layers of the grid to a plurality of feature vectors according to an embodiment.
FIG. 5 illustrates a diagram for training a machine learning model for a specific forest stand attribute according to an embodiment.
FIG. 6 illustrates a flow diagram for predicting a single forest stand target attribute for a given forest stand according to an embodiment.
FIG. 7 provides a graphical illustration for the individual T<x,y> values of the stand polygon and the average T_{stand} value of the stand polygon.
FIG. 8 illustrates an exemplary system or apparatus 800 may include a variety of optional hardware and software components.

### DETAILED DESCRIPTION

In the following description, references are made to the accompanying drawings, which form part of the present disclosure, and in which are shown, by way of illustration, specific aspects, embodiments and examples in which the present disclosure may be placed. It is understood that other aspects may be utilized and structural or logical changes may be made without departing from the scope of the present disclosure. The following detailed description, therefore, is not to be taken in a limiting sense, as the scope of the present disclosure is defined by the appended claims. Further, the present disclosure can be embodied in many other forms and should not be construed as limited to any certain structure or function disclosed in the following description.

According to the detailed description, it will be apparent to ones skilled in the art that the scope of the present disclosure covers any embodiment of the present invention, which is disclosed herein, irrespective of whether this embodiment is implemented independently or in concert with any other embodiment of the present disclosure. For example, the apparatus and method disclosed herein can be implemented in practice by using any numbers of the embodiments provided herein. Furthermore, it should be understood that any embodiment of the present disclosure can be implemented using one or more of the elements presented in the appended claims.

As used herein, the term "forest stand" may refer to a geographically restricted area that is governed and/or owned by a specific entity. A plurality of forest stands may be geographically close to each other, or alternatively, they may be a distributed in multiple geographically separate locations.

As used herein, the term "forest stand target attribute" may refer to any attribute that is measurable for a forest stand and that somehow characterizes the forest stand. For example, a forest stand target attribute may determine a distribution of tree species in the forest stand, a distribution of wood classes (for example, log wood, pulp wood, energy wood etc.), a distribution of log classes, sawlog quality (for example, in terms of knots and/or branches), pulp wood quality, forest growth rate, volume per hectare, basal area, average diameter, average diameter at breast height, average height, average volume per stem, number of stems per hectare, recommended harvest operation (such as first or subsequent thinning, or regenerative felling, for example, according to national forest management guidelines), risk of forest damages by fire, risk of forest damages by storm, and risk of forest damages by pests etc.

As used herein, the term "input variable" may refer to any variable that can be measured about one or more forest stands or somehow affects to the development of trees in one or more forest stands. Input variables may be determined, for example, based on at least one of optical image data, small aperture radar data, airborne laser scanning data, satellite image data, silvicultural data, forest inventory data, geographical data, geological data, historic weather data, historic climate data etc.

As used herein, the term "grid" may refer to a structure composed of geographically non-overlapping cells. In other words, a geographical area can be divided into a plurality of geographically non-overlapping cells, and the cells together constitute the grid.

As used herein, the term "grid layer" may refer to a sub-part associated with the grid. A plurality of grid layers may be associated with the grid. Each grid layer associated with the grid comprises or covers the same set of geographically non-overlapping cells.

Forest owners and the wood processing industry have a natural interest to know the quantitative and qualitative attributes of standing trees in the forest stands they own or intend to purchase. However, it is very difficult and expensive to measure these attributes for large forest areas manually, or even with the support of drones. The present disclosure provides a solution for training a model for predicting a forest stand target attribute and for predicting the forest stand target attribute. The solution uses direct indicator data about forest stands, indirect indicator data about the forest stands and empirical measurement data about the forest stands to build a trained model for the forest stand target attribute. Using the trained model, it is possible to predict, for a given forest stand, the value of the forest stand target attribute.

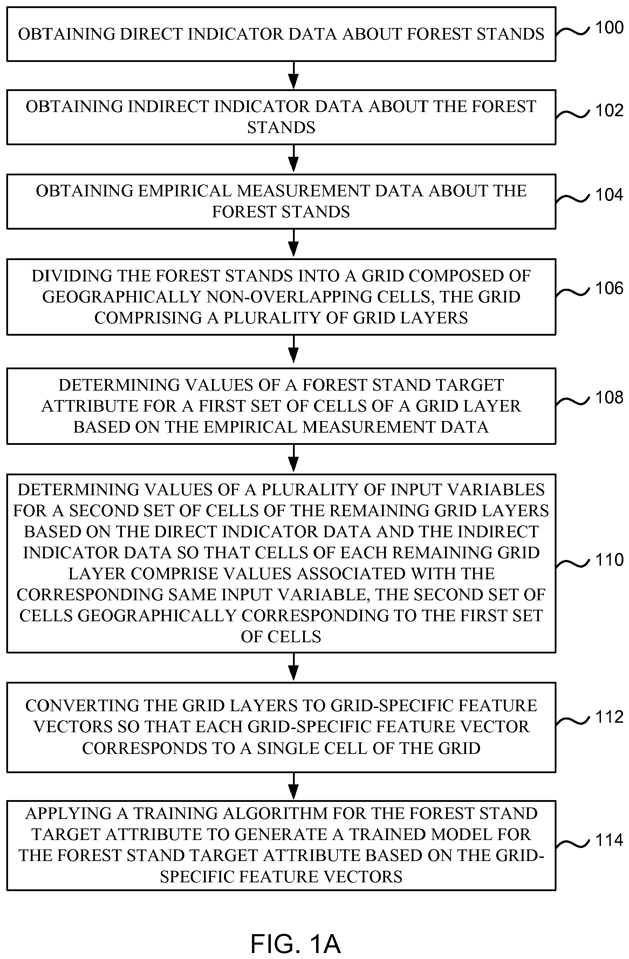

FIG. 1A illustrates a flow chart of a method for training a model for predicting a forest stand target attribute according to an embodiment.

At 100, direct indicator data about forest stands is obtained. The direct indication data may refer to imaging data, scanning data and/or measurement data that is available about the forest stands. The term "imaging data", "scanning data" and/or "measurement data" is to be understood widely to refer to any data representing or originating from measurements of standing trees. The direct indication data may comprise, for example, at least one of aerial image data, small aperture radar data, airborne laser scanning data, satellite image data etc.

At 102, indirect indicator data about the forest stands is obtained. The indirect indication data may refer to data that helps to explain growth of trees in the forest stands and/or to data associated with growth of wood in forest stands. The indirect indication data may comprise, for example, at least one of silvicultural data, geographical data, geological data, historic weather data, historic climate data etc. The geographical data may refer, for example, to at least one of geographic location data, altitude data, steepness data and direction of a terrain slope. The geological data may refer, for example, to soil type, soil thickness, water storage capacity and concentration of plant nutrients.

At 104, empirical measurement data about the forest stands is obtained. The empirical data may refer to data obtained from at least one source processing wood and/or harvesting wood. The empirical forest data may refer, for example, to data obtained from harvest operations and mills. The empirical forest data may comprise, for example, measurement data from harvester machines, measurement data from log-sorting machines in saw mills, X-ray data from saw mills, measurement data from pulp mills and integrated mills etc.

At 106 the forest stands are divided into a grid composed of geographically non-overlapping cells. In an example, the forest stands may geographically cover a whole country or only certain parts of the country. Further, the forest stands may be governed or owned by one or more entities. Further, the grid comprises a plurality of grid layers. Each grid layer covers the same set of geographically non-overlapping cells.

At 108 values of a forest stand target attribute are determined for a first set of cells of a grid layer based on the empirical measurement data. Each cell of the first set of cells of the grid layer has a specific value of the forest stand target attribute. The forest stand target attribute may refer, for example, to at least one of distribution of tree species, distribution of wood classes, distribution of log classes, sawlog quality, pulp wood quality, forest growth rate, volume per hectare, basal area, average diameter, average diameter at breast height, average height, average volume per stem, number of stems per hectare, recommended harvest operation, risk of forest damages by fire, risk of forest damages by storm, and risk of forest damages by pests. In an embodiment, the first set of cells associated with the grid layer do not comprise all cells of the grid layer. In other words, the first set of cells comprise only a subset of cells of the grid layer. Values of the forest stand target attribute are available only for some cells, i.e. the first set of cells, of all cells of the grid layer. In an embodiment, forest stand target attribute values are available only for a subset of all cells of the grid layer, and in some embodiments, only for a small or a very small subset of all cells of the grid layer. In an embodiment, values of the forest stand target attribute statistically represent the whole geographical area covered by the grid. In some embodiments, the order of the "small subset" may be in the range of 0.01% (1 out of 10.000) down to 0.0001% (1 out of 1000.000) depending on the geographic independence of the cells. Typically, the forest stand target attribute cells come in clusters (one cluster per measured forest stand), and from a statistical perspective a large cluster does not contain much more information than a small cluster due to the similarity of the cells within the cluster.

At 110 values of a plurality of input variables are determined for a second set of cells of the remaining grid layers based on the direct indicator data and the indirect indicator data so that cells of each remaining grid layer comprise values associated with the same input variable. The second set of cells geographically correspond to the first set of cells. In other words, each grid layer may comprise only values associated with a specific input variable. In an embodiment, although values of the plurality of input variables may be available for all or almost all cells of the remaining grid layers, only values of the plurality of input variables are used that relate to cells corresponding to cells that have values of the target forest stand attribute.

At 112 the grid layers are converted to grid-specific feature vectors so that each grid-specific feature vector corresponds to a single cell of the grid. In an embodiment, each grid-specific feature vector comprises scalar values corresponding to the single cell.

At 114 a training algorithm is applied for the forest stand target attribute to generate a trained model for the forest stand target attribute based on the grid-specific feature vectors. The training algorithm enables finding the most accurate and most general approximative function (trained model) for computing forest stand target attribute from the plurality of input variables at grid cell level. The term "training algorithm" generally refers to any supervised machine learning algorithm that can be used to generate the trained model. Similarly, the term "trained model" generally refers to machine learning model produced with the machine learning algorithm. In an embodiment, the machine learning algorithms used for this purpose are preferably regression algorithms such as an error-minimizing, non-linear machine learning algorithm, such as an Artificial Neural Network, Decision Tree, Random Forest, or Gradient Boosted Trees, or any algorithm which can handle hundred and more, potentially collinear, input variables. The regression algorithms minimize the estimation error of the approximative function (model) by iteratively estimating the forest stand target attribute based on the input variables within the grid-specific feature-vectors and adjusting the model parameters depending on the algorithm and its chosen hyperparameters. Each training cycle is repeated for different train/test splits of the available feature vectors to ensure the model is able to generalize sufficiently for previously unseen data (cross-validation). By systematically repeating the learning process with different hyperparameters and potentially different algorithms, the model accuracy is further improved until an optimal model has been found.

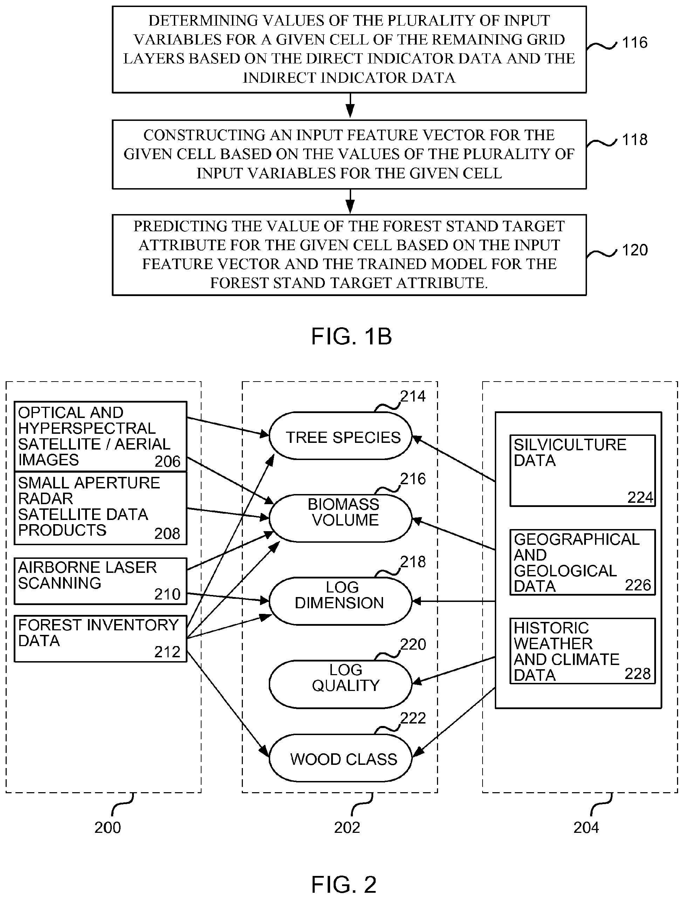

FIG. 1B illustrates an embodiment in which a trained model for the forest stand target attribute is used to predict the value of the forest stand target attribute for one or more cells or one or more forest stands. At 116 values of the plurality of input variables are determined for a given cell of the remaining grid layers based on the direct indicator data and the indirect indicator data. At 118 an input feature vector for the given cell is constructed based on the values of the plurality of input variables for the given cell. At 120 the value of the forest stand target attribute for the given cell is predicted based on the input feature vector and the trained model for the forest stand target attribute. As the trained model has been trained with "real" empirical measurement data and correlation of this data with the input variables can be learned, this enables generating a prediction for the given cell.

The solution disclosed above in FIG. 1A and/or FIG. 1B provides a solution in which, even though a limited amount of input data is used during a training phase, the value of the forest stand target attribute can be predicted within the whole area of the grid or almost everywhere within the grid. When the values of the forest stand target attribute statistically represent the whole geographical area covered by the grid, this may enable making accurate predictions for the forest stand target attribute within the whole area of the grid or almost everywhere within the grid.

FIG. 2 illustrates an overview of different input variables and predicted forest stand target attributes and their relations according to an embodiment.

FIG. 2 illustrates the three main data types of forest stands that enables prediction, for a given forest stand, of the value of a forest stand target attribute based on a trained model for the forest stand target attribute. Direct indicator data 200 about forest stands may refer to imaging or scanning data that is available about the forest stand, and it may comprise, for example, optical and hyperspectral satellite data and/or aerial image 206, small aperture radar data and/or satellite data 208, airborne laser scanning data 210 and forest inventory data 212. Indirect indicator data 204 about forest stands may comprise silvicultural data 224, geographical and geological data 226, and historic weather and climate data 228. The silvicultural data 224 comprises data, for example, related to forest management activities, such as time when a forest stand was planted, quantity of seedlings per tree species, and how often the forest has been thinned. The historic weather and climate data 228 means, for example, climate reanalysis data (estimation of weather parameters for a large geographic grid) covering a significant time span (for example, 15 years). Empirical measurement data 202 about the forest stands may comprise data about tree species distribution 214 in the forest stands, data about volume/biomass 216 in the forest stands, log dimension data 218 in the forest stands, log quality data 220 and wood class data 222 (for example, sawlog, pulp wood, energy wood) in the forest stands.

Arrows between the data entities exemplify possible relations between the data entities. For example, each data entity 224, 226, 228 has an effect to each empirical data while log quality 220 does not have a relation to the direct indicator data 200. As another example, the airborne laser scanning 210 enables determination of the biomass volume 216 and log dimension 218 but not the tree species 214.

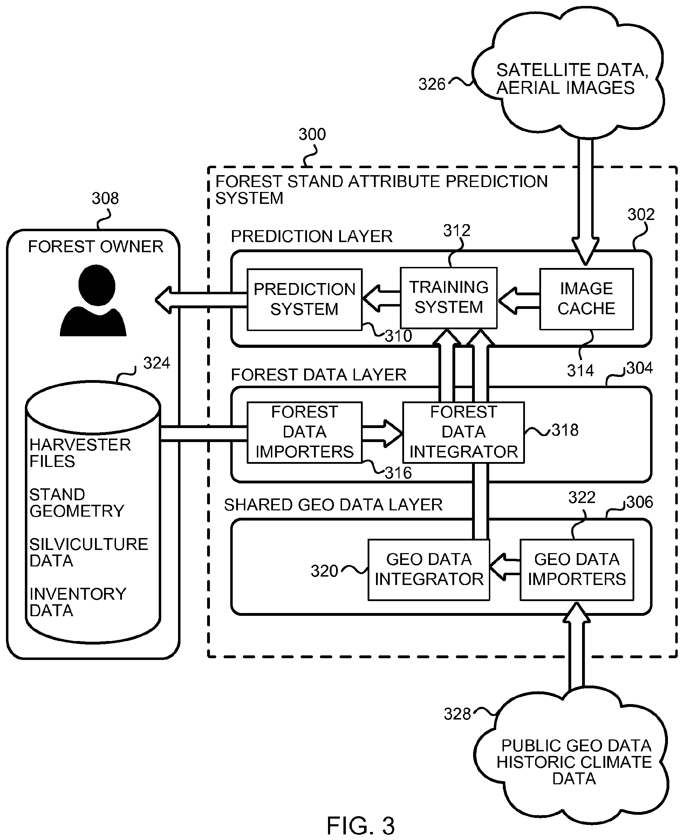

FIG. 3 illustrates a block diagram of a forest stand target attribute prediction system 300 according to an embodiment. The forest stand target attribute prediction system 300 may be configured to implement the method discussed in relation to FIG. 1A and/or FIG. 1B. The forest stand target attribute prediction system 300 may be implemented with at least one server executing at least one computer program implementing the method. The forest stand target attribute prediction system 300 may comprise an internal memory or memories that is configured to store information. The forest stand target attribute prediction system 300 may also be connected to at least one external memory.

In FIG. 3 a structure of the forest stand target attribute prediction system 300 is explained using a shared geo data layer 306, a forest data layer 304 and a prediction layer 302. This structure is only one possible, and it is evident that also other logical structures can be used.

The shared geo data layer 306 comprises geo data importers 322. geo data and historic weather and climate data is imported to the forest stand target attribute prediction system 300 with the geo data importers 322. A geo data integrator 320 processes the imported data to a form that can later be used by a training system 312.

The forest data layer 304 comprises forest data importers 316. Data 324 from a forest owner can be imported to the forest stand target attribute prediction system 300 with the forest data importers 316. The data 324 may comprise harvester files, stand geometry data, silvicultural data and inventory data. A forest data integrator 318 processes the imported data to a form that can later be used by the training system 312.

The prediction layer 302 comprises an image cache 304 that receives data from various image sources 326, for example, satellite image data, aerial image data, airborne laser scanning data etc. The training system 312 receives data from the geo data integrator 320, the forest data integrator 318 and the image cache 314. This data is used to train machine-learning based algorithms to enable prediction of at least one forest stand target attribute and to provide trained models for forest stand target attributes. A prediction system 310 then uses the trained models for making predictions, for example, for a forest stakeholder 308 having a material interest in the forest stand attributes. As an example, the forest owner may want to determine an ideal forest stand or forest stands based on specific forest stand target attributes. For example, the forest owner may want to cut only spruce trees with a specific amount and with a specific log dimension and log quality parameters within 150km from a specific saw. By using the prediction system 310, the forest owner 308 is able to determine which forest stands alone or together fulfill these parameters.

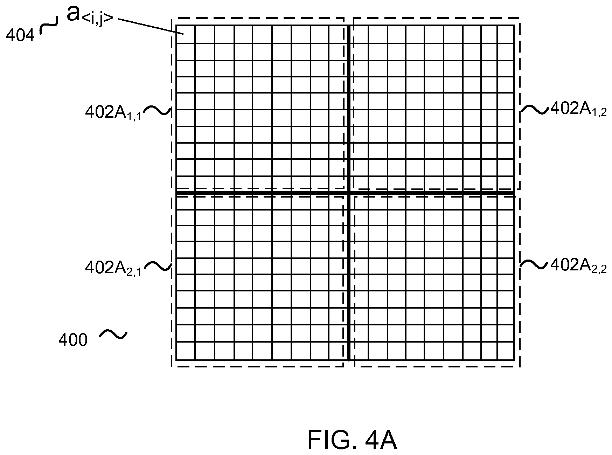

FIG. 4A illustrates the concept of a grid 400 and grid cells 402A_{1,1}, 402A_{1,2}, 402A_{2,1}, 402A_{2,2} according to an embodiment. The grid 400 may cover a large geographical area. The grid 400 may cover a plurality forest stands that may geographically cover a whole country or only certain parts of the country. Further, the forest stands may be governed or owned by one or more entities.

FIG. 4A illustrates an exemplary situation in which the grid 400 comprises four cells 402A_{1,1}, 402A_{1,2}, 402A_{2,1}, 402A_{2,2}, meaning that the grid is a 2 x 2 grid. In other embodiments, the grid 400 may comprise any number of cells to cover a specific geographical area. Each cell 402A_{1,1}, 402A_{1,2}, 402A_{2,1}, 402A_{2,2} may represents a specific geographical area of N x N meters. N may take any value, and typically it is 15 ≤ N ≤ 30.

To enable averaging grid-level predictions, all forest stand target attributes may be expressed in area-neutral terms, for example, volume by hectare instead of absolute volume.

FIG. 4A also illustrates that a cell or cells may be formed by a higher-resolution grid with a resolution of M x M pixels within each cell 402A. The higher-resolution grid may comprise a number of sub-cells 404. The size of the sub-cell 404 may be, for example, 2 x 2 meters of less. As another example, the size of the sub-cell 404 may be 1 x 1 meters and the size of the cells 402A may be 15 x 15 meters each. In some embodiments, a grid layer may be an output of a supplementary regression algorithm operating on higher-resolution gridded data (such as aerial images, satellite images, or height profiles from airborne laser scans). Input elements of this algorithm are M x M pixel raster segments ("tiles") corresponding to the N x N meters of the target grid, whereby the ratio N : M is typically 2 : 1 or less (i.e. pixels cover an area of 2 x 2 meters or less). In some embodiments, images of a forest area with a spatial resolution of 10 meters or higher, such as aerial images (orthophotos) and satellite images (including optical, false-color, and hyperspectral images) may be used as input to a supplementary regression algorithm to produce a grid layer which can be combined with other layers.

In an embodiment, values for cells 402A_{1,1}, 402A_{1,2}, 402A_{2,1}, 402A_{2,2} of the grid 400 may relate to direct indicator data about forest stands, indirect indicator data about the forest stands, and empirical measurement data about the forest stands. A single scalar value is preferably associated with each cell 402A_{1,1}, 402A_{1,2}, 402A_{2,1}, 402A_{2,2}.

In an embodiment, low resolution grid values A_{<x,y>} (i.e. a value for the cell 402A_{1,1}) may be calculated from high-resolution grid values a_{<i,j>} (i.e. values of sub-cells 404). The calculation may be made using any appropriate method, for example, convolutional neural network, statistical aggregation or filters combined with statistical aggregation.

The grid may comprise a plurality of grid layers 400A, 400B, 400C, 400T.

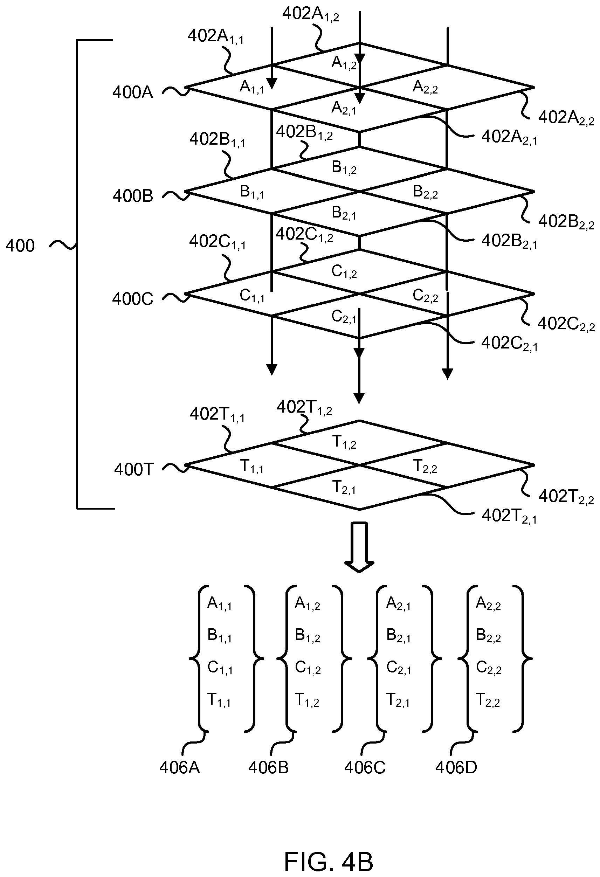

FIG. 4B illustrates transformation of the grid layers 400A, 400B, 400C, 400T of the grid 400 to a plurality of feature vectors 406A, 406B, 406C, 406D. Each cell of each grid layer 400A, 400B, 400C, 400T covers the same geographical area. In terms of the example illustrated in FIG. 4B, each cell of the grid 400 consists of corresponding cells of the grid layers 400A, 400B, 400C, 400T. Further, in some embodiments, values of a single grid layer are associated with a single input variable. Although FIG. 4 provides an example using three input variables A, B, C, this is only exemplary, and any number different input variables can be used.

As already discussed in relation to FIG. 4A, the grid layers 400A, 400B, 400C may relate to the direct indicator data about forest stands or the indirect indicator data about the forest stands, whereas the grid layer 400T relates to the empirical measurement data about the forest stand target attribute. A single scalar value is preferably associated with each cell 402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}, 402T_{1,1}, 402T_{1,2}, 402T_{2,1}, 402T_{2,2}. More specifically, values A_{1,1}, A_{1,2}, A_{2,1}, A_{2,2} of a first input variable are associated with the cells 402A_{1,1}, 402A_{1,2}, 402A_{2,1}, 402A_{2,2} of the grid layer 400A, values B_{1,1}, B_{1,2}, B_{2,1}, B_{2,2} of a second input variable are associated with the cells 402B_{1,1}, 402B_{1,2}, 402B_{2,1}, 402B_{2,2} of the grid layer 400B, values C_{1,1}, C_{1,2}, C_{2,1}, C_{2,2} of a third input variable are associated with the cells 402C_{1,1}, 402C_{1,2}, 402C_{2,1}, 402C_{2,2} of the grid layer 400C, and values T_{1,1}, T_{1,2}, T_{2,1}, T_{2,2} of a forest stand target attribute are associated with the cells 402T_{1,1}, 402T_{1,2}, 402T_{2,1}, 402T_{2,2} of the grid layer 400T.

In some embodiments, values of the forest stand target attribute T are available only for some cells of all cells of the grid layer 400T. In an embodiment, forest stand target attribute T values are available only for a subset of all cells of the grid layer 400T, and in some embodiments, only for a small or a very small subset of all cells of the grid layer. In an embodiment, values of the forest stand target attribute statistically represent the whole geographical area covered by the grid. In some embodiments, the order of the "small subset" may be in the range of 0.01% (1 out of 10.000) down to 0.0001% (1 out of 1000.000) depending on the geographic independence of the cells. Typically, the forest stand target attribute cells come in clusters (one cluster per measured forest stand), and from a statistical perspective a large cluster does not contain much more information than a small cluster due to the similarity of the cells within the cluster. Further, in some embodiments, although values of the plurality of input variables A, B, C may be available for all or almost all cells of the grid layers 400A, 400B, 400C, only values of the plurality of input variables may be used that relate to cells corresponding to cells that have values of the target forest stand attribute T.

The grid layers 400A, 400B, 400C, 400T may be pre-computed from geographic source data by normalization to the target coordinate system and re-sampling to match the grid coordinates and geo-references of the target grid. The grid layers 400A, 400B, 400C, 400T may be stored in a geospatial database with indexes allowing fast access and joins with corresponding values from other grid layers.

In some embodiments, latitude and longitude values of the centerpoint of a grid cell may be used as input variables for the regression algorithm, to account for a potential geographic bias in the forest attributes.

In some embodiments, airborne laser scans (ALS) may be used to produce a grid layer providing the average height of trees within grid cells.

In some embodiments, a soil type may be used as is an input grid layer where each grid cell is associated with its predominant soil type. The predominant soil type of a grid cell may be calculated as the soil type occupying the largest area of given grid cell among all soil types covering the same area in a geographic map of soil types.

In some embodiments, a forest cover may be a grid layer computed, for example, from thematic maps delineating forest areas from non-forest areas (water, open land, residential areas) and preferably including the predominant tree type (coniferous or deciduous).

In some embodiments, silvicultural input data may be transformed from a forest stand-level data to grid-level data by assuming an equal distribution of the parameters throughout the forest stand, so that all grid cells contained in the area of the forest stand are assigned identical silvicultural attributes. The following provides some examples of grid layers that may be calculated based on silvicultural data: a year when forest was planted, quantity of seedlings, per species, and sufficiency of thinning operations.

In some embodiments, one or more grid layers may be derived from a digital surface model. These grid layers may comprise one or more of the following data per grid cell:
- a sea level of a grid cell
- steepness (or slope) of a grid cell, for example, from 0 (flat) to 90 (vertical)
- orientation of a grid cell, for example, the north-based azimuth of the normal vector of the ground surface of the grid cell, with 0 being north and 90 being east
- solar potential, for example, ranging from 0 to 1, may be computed as a scalar product of the normal vector of the grid cell and direction of the equinoctial sun at noon (when elevation of sun = (90 - latitude)).

In some embodiments, climate grid variables may be pre-computed from climate reanalysis data covering, for example, the last 15 years (such as the ECMWF ERA5 data set with a grid size of 31 x 31 km). The following grid layers may be computed with the grid resolution of the reanalysis data and later re-sampled to the grid used in the regression algorithm:
- a growing season may be computed, for example, as the average number of days per year during past 15 years with average daily temperatures above threshold for tree growth.
- average precipitation by month may be computed as the average amount of rain during each month of the growing season (for example, one value for each month from April to September)
- solar irradiance may be computed as the average net solar irradiance during the growing season.

In some embodiments, new grid layers may be added later to further enrich the input data. The machine learning algorithm used by the forest stand target attribute predictions system is capable of accommodating such additional layers.

In some embodiments, if a grid layer is missing or is incomplete for a certain region in which predictions are made, a default value may be used for these gaps:
- The default value may be computed as an average of close-by values if the gap is small.
- For larger gaps or when applying the regression algorithm to a territory where a certain grid layer is not available at all, the default value may be assumed to be the average value of the grid layer used for training the regression algorithm.
- Alternatively, the default value may be set for a given grid layer based on other sources of information about the target region, such as statistical information.

The grid layers 400A, 400B, 400C, 400D may then be converted in a plurality of feature vectors 406A, 406B, 406C, 406D. Each feature vector 406A, 406B, 406C, 406D is a vector of scalar input variables associated with a single grid cell. For example, the feature vector 406A comprises values A_{1,1}, B_{1,1}, C_{1,1} and T_{1,1} associated with grid cells 402A_{1,1}, 402B_{1,1}, 402C_{1,1}, and 402T_{1,1}.

In some embodiments, the indirect indicator data may comprise time series for each of N input variables for a cell. An optimal aggregation function for computing a single derived input variable from a subset of up to N input variables may be calculated from the time series of these input variables for each cell, so that the aggregation function maximizes a correlation between the single derived input variable and the forest stand target attribute. Further, the aggregation function may be applied to all cells of the grid for computing a derived input grid layer. The input variable here may relate, for example, to temperature data (low/high/average), precipitation data (for example, the amount of rain), average humidity, depth of snow cover, average solar irradiance, average wind speed etc. Each cell could, for example, comprise a time series of daily values for these input variables over a period of 15 years. An example for a derived input variable could be "warm/light/moist days per year", and its aggregation function could be defined as the average number of days per year with a daily low temperature above X and daily solar irradiance above Y and total rain amount above Z during the preceding month. An optimal aggregation function for this derived input variable would be the aggregation function described above whereby X, Y, and Z are chosen so that the Pearson correlation coefficient across all cells between the cell's forest target attribute (where known) and the corresponding derived input variable is maximized.

Feature vectors may be separately generated for each forest stand target attribute based on the plurality of grid layers associated with the input variables.

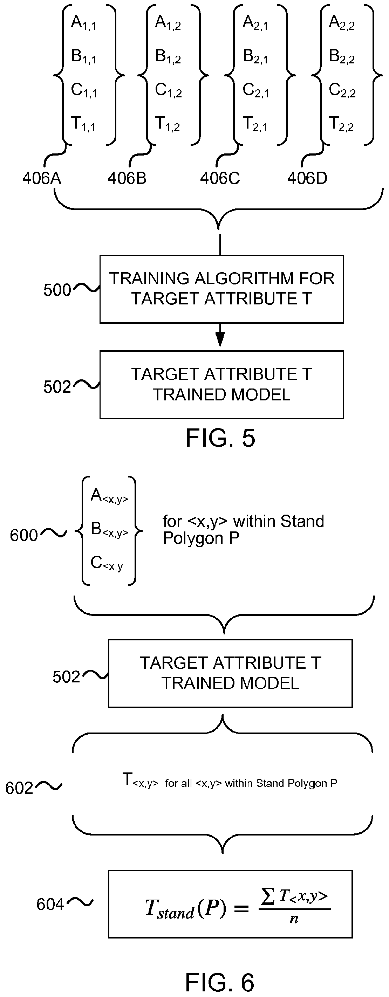

FIG. 5 illustrates a diagram for training a machine learning model for a specific forest stand attribute. Feature vectors 406A, 406B, 406C, 406D are used as input data for a training algorithm for the forest stand attribute 500.

Machine learning-based regression models for predicting forest attributes may be trained and validated with empirical measurement data which have been gathered from forest stands or in a location where wood is processed. The empirical measurement data may comprise one or more of the following:
- data from field measurements in sample areas
- measurement data from harvester machines
- measurement data from log-sorting machines in saw mills
- measurement data from X-ray systems in saw mills
- measurement data from pulp mills and integrated mills

The empirical measurement data may be used to include all trees of one or more categories (for example, pulp wood and/or saw logs) of a harvested forest stand, to ensure that the empirical measurement data is representative for the entire forest stand and that they match the scope of the regression algorithm, which is also the whole tree population of a forest stand. In those embodiments using harvester data, only harvester data from clear cutting operations is considered while data from thinning operations is not considered.

Since the regression algorithm operates on a grid-level for predicting forest stand target attributes from a vector of input variables (i.e. from the feature vectors 406A, 406B, 406C, 406D), the empirical measurement data at stand-level may be transformed to grid-level estimates of the empirical measurement data. The empirical data may relate, for example, to X-ray data or other quality measurement data. The transformation may be done by assuming an equal distribution of forest stand target attributes throughout the forest stand area, so that all grid cells contained in this area get identical forest stand target attributes, if no further geo-references are contained in the measurements.

In some embodiments, values of the forest stand target attribute may be determined based on the -ray data obtained, for example, from saw mills. The forest stand target attribute may represent a log quality parameter derived from X-ray images of logs, for example, density of year rings, density of knots, distance between knots, and other irregularities in the wood structure.

In some embodiments, empirical measurement data associated with a specific geographical location is attributed to a respective cell covering the specific geographical location. More specifically, measurements from harvester operations may comprise location-information about individual trees. The measurements may be attributed to the respective grid cell covering the location of the tree. This ensures a higher correlation between the input variables of the grid cell to the measurements, and consequently a higher accuracy of the resulting predictions.

In some embodiments, the location-information of trees from harvester measurements may have a tolerance (i.e. a potential inaccuracy) larger than, for example, 20% of the size of a grid cell (i.e. > 3-6 meters). In this situation, tree attributes, in particular its volume, may be distributed between the grid cell and its eight adjacent cells using, for example, a weighted box filter. The weights of the filter may be chosen to reflect the area of each cell covered by an imaginary grid cell co-centric with the cell containing the tree and a size of (N+T) x (N+T) meters where T is the tolerance of the tree location in meters.

The regression model for a forest stand target attribute may be trained using an error-minimizing, non-linear machine learning algorithm, such as an Artificial Neural Network, Decision Tree, Random Forest, or Gradient Boosted Trees, or any algorithm which can handle hundred and more, potentially collinear, input variables.

For predicting forest stand attributes which are a not numeric by nature but categorical, such as the predominant tree species of a stand, where typically a classification algorithm could be applied, the preferred approach is to express the attribute using a combination of related numerical attributes. For example, the predominant species can be expressed as the species with the largest volume in a given stand, or the species with the highest probability of being the predominant species.

In some embodiments, the regression algorithm for forest stand target attributes at stand-level may be validated using leave-one-out cross-validation on the measurements for entire stands. More specifically, for each round of validation a train/test split may be created on the empirical data at grid-level so that all grid-level data from exactly one stand are used as test set, and remaining data are used as training set for one incarnation of a grid-level regression model.

In some embodiments, to minimize the prediction error determined via the cross-validation, the regression algorithm may be tuned using, for example, automatic hyperparameter optimization. To find the best hyperparameters with the least computing resources, a Bayesian hyperparameter optimization approach may be used.

When the feature vectors 406A, 406B, 406C, 406D are used with the training algorithm for the forest stand target attribute 502, ultimately a forest stand target attribute trained model is obtained. In some embodiments, a forest stand target attribute model is generated separately for each forest stand target attribute.

The final grid-level algorithm may further be validated using empirical data from sample plots, where such data are available. Sample plot data may be country-wide field measurements of small forest plots (typically 100 to 250m²). The purpose of this validation is to compare prediction accuracy with existing, country-wide estimations of certain forest attributes.

FIG. 6 illustrates a flow diagram for predicting a single forest stand target attribute for a given forest stand.

At 600, a set of input feature vectors is constructed following the principles described in FIG. 4B for all grid cells with coordinates <x,y> within the polygon of a given forest stand where the forest stand target attribute is unknown. Thus, each input feature vector relates to a single grid cell <x,y> and serves as an individual input for the forest stand target attribute trained model 502. The forest stand target attribute trained model 502 provides a forest stand attribute prediction T<x,y> for all <x,y> in the stand polygon. In an embodiment, an average value for the numeric forest stand target attribute in the stand polygon may be obtained by summing the individual T<x,y> values and dividing the sum by the number of T<x,y> values. Instead of using the arithmetic mean for the numeric forest stand target attribute, in other embodiments, it is possible to calculate a total value for the stand polygon differently. In some embodiments, especially for smaller forest stands, the cells at the border which are only partially covered by the stand polygon may be excluded from the arithmetic mean. Further, in some embodiments, the "outliers" may be removed from this calculation, for example, 20% of cells with smallest forest stand target attribute values and 20% with largest forest stand target attribute values. Alternatively, the median may be used in some embodiments for calculating the forest stand target attribute, so that T_{stand}(P) = median(T<x,y>).

Further, it is possible to predict, for a large number of forest stands, values of multiple forest stand target attributes based on the trained models for the forest stand target attributes and then apply at least one search criterion to find at least one forest stand matching at least one search criterion or matching all search criteria simultaneously. This enables a user to find best matching forest stand for his needs.

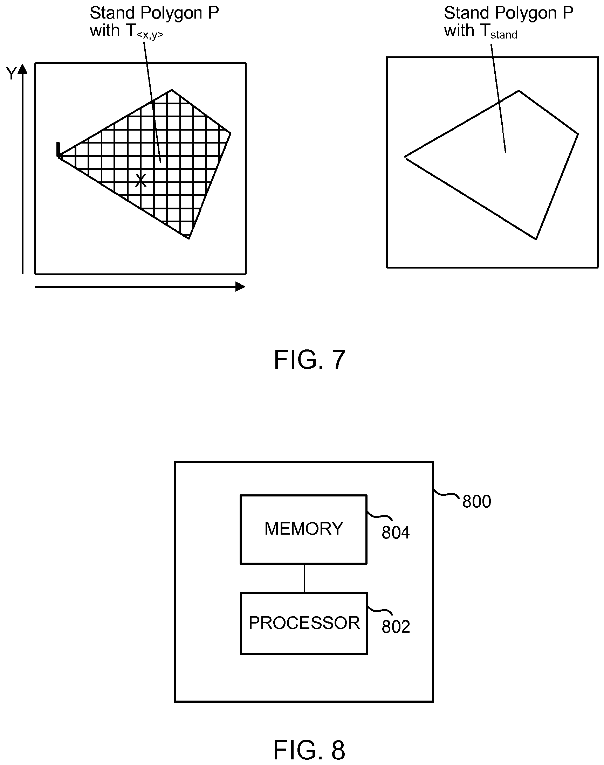

FIG. 7 provides a graphical illustration for the individual T<x,y> values of the stand polygon and the average T_{stand} value of the stand polygon.

FIG. 8 illustrates a system depicting an exemplary system or apparatus 800 that may include a variety of optional hardware and software components. The illustrated system or apparatus 800 can include one or more controllers or processors 802 (e.g., signal processor, microprocessor, ASIC, or other control and processing logic circuitry) for performing such tasks as signal coding, data processing, input/output processing, power control, and/or other functions.

The illustrated system or apparatus 800 can also include a memory or memories 804. The memory 804 can include a non-removable memory and/or a removable memory. The non-removable memory can include RAM, ROM, flash memory, a hard disk, or other well-known memory storage technologies. The removable memory can include flash memory or other well-known memory storage technologies. The memory can be used for storing data and/or code for running an operating system and/or one or more applications.

The system or apparatus 800 may be configured to implement the various features, examples and embodiments illustrated, for example, in FIGS. 1 - 7 partially or completely. The functionality described herein can be performed, at least in part, by one or more computer program product components such as software components. The system or apparatus 800 may comprise a single apparatus or multiple apparatuses, and it can provide a cloud-based service that is accessible via a data communication network, for example, the internet.

According to an example, the processor 802 may be configured by the program code which when executed performs the examples and embodiments of the operations and functionality described. Alternatively, or in addition, the functionality described herein can be performed, at least in part, by one or more hardware logic components. For example, and without limitation, illustrative types of hardware logic components that can be used include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), Graphics Processing Units (GPUs). The system or apparatus 800 may additionally include components and elements not disclosed in FIG. 8, for example, input/output interfaces, a receiver, a transmitter, a transceiver, input/output ports, a display etc.

At least some of the aspects and embodiments discussed above enable at least one of the following:
- more accurate prediction of a distribution of tree species
- more accurate prediction of a distribution of wood classes (log wood, pulp wood, energy wood)
- more accurate prediction of a distribution of log classes
- prediction of sawlog quality (knots/branches)
- prediction of pulp wood quality
- prediction of forest growth rate
- more accurate prediction of total wood quantity
- more accurate recommendations of harvest operations
- estimation of risks of forest damages through fire, storm, or pests.

Further, at least some of the aspects and embodiments discussed above may also allow more accurate silviculture management and precision harvesting techniques, and more accurate valuation of forest assets. Further, at least some of the aspects and embodiments discussed above may also enable owners of forest to get more accurate valuations of their assets and to better utilize their assets to meet market demands. Further, at least some of the aspects and embodiments discussed above may also enable purchasers of forest inventory to obtain a more accurate prediction of characteristics of various forest stands both for valuation purposes and to determine how well the inventory suits the intended processing purpose.

Any combination of the illustrated components disclosed in FIG. 8, for example, at least one of the processor 802 and the memory 804 may constitute means for obtaining direct indicator data about forest stands; means for obtaining indirect indicator data about the forest stands; means for obtaining empirical measurement data about the forest stands; means for dividing the forest stands into a grid composed of geographically non-overlapping cells, the grid comprising a plurality of grid layers; means for determining values of a forest stand target attribute for the cells of a grid layer based on the empirical measurement data; means for determining values of a plurality of input variables for the cells of the remaining grid layers based on the direct indicator data and the indirect indicator data so that cells of each remaining grid layer comprise values associated with the corresponding same input variable; means for converting the grid layers to grid-specific feature vectors that each grid-specific feature vector corresponds to a single cell of the grid; means for applying a training algorithm for the forest stand target attribute to generate a trained model for the forest stand target attribute based on the grid-specific feature vectors; and means for predicting, for a given forest stand, the value of the forest stand target attribute based on the trained model for the forest stand target attribute.

Further, any combination of the illustrated components disclosed in FIG. 8, for example, at least one of the processor 802 and the memory 804 may constitute means for obtaining direct indicator data about forest stands, the direct indicator data comprising imaging data, scanning data and/or measurement data about the forest stands; means for obtaining indirect indicator data about the forest stands, the indirect indicator data comprising data associated with growth of wood in forest stands; means for obtaining empirical measurement data about the forest stands, the empirical measurement data being obtained from at least one source processing wood and/or harvesting wood; means for dividing the forest stands into a grid composed of geographically non-overlapping cells, the grid comprising a plurality of grid layers; determining values of a forest stand target attribute for a first set of cells of a grid layer based on the empirical measurement data; means for determining values of a plurality of input variables for a second set of cells of the remaining grid layers based on the direct indicator data and the indirect indicator data so that cells of each remaining grid layer comprise values associated with the corresponding same input variable, the second set of cells geographically corresponding to the first set of cells; means for converting the grid layers to grid-specific feature vectors so that each grid-specific feature vector corresponds to a single cell of the grid; means for applying a training algorithm for the forest stand target attribute to generate a trained model for the forest stand target attribute based on the grid-specific feature vectors; means for determining values of the plurality of input variables for a given cell of the remaining grid layers based on the direct indicator data and the indirect indicator data; means for constructing an input feature vector for the given cell based on the values of the plurality of input variables for the given cell; and means for predicting the value of the forest stand target attribute for the given cell based on the input feature vector and the trained model for the forest stand target attribute.

Those skilled in the art should understand that each step or operation, or any combinations of the steps or operation mentioned above, can be implemented by various means, such as hardware, firmware, and/or software. As an example, one or more of the steps or operation described above can be embodied by computer or processor executable instructions, data structures, program modules, and other suitable data representations. Furthermore, the computer executable instructions which embody the steps or operation described above can be stored on a corresponding data carrier and executed by at least one processor like the processor 802 included in the apparatus 800. This data carrier can be implemented as any computer-readable storage medium configured to be readable by said at least one processor to execute the computer executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the exemplary embodiments of the present invention are disclosed herein, it should be noted that any various changes and modifications could be made in the embodiments of the present invention, without departing from the scope of legal protection which is defined by the appended claims. In the appended claims, the mention of elements in a singular form does not exclude the presence of the plurality of such elements, if not explicitly stated otherwise.

## Claims

1. A computer-implemented method for predicting a forest stand target attribute, the method comprising:
obtaining (100) direct indicator data about forest stands, the direct indicator data comprising satellite image data and at least one of airborne laser scanning data or small aperture radar satellite data;
obtaining (102) indirect indicator data about the forest stands, the indirect indicator data providing data that helps to explain growth of trees in the forest stands, the indirect indicator data comprising at least one of silvicultural data, geographical data, geological data, historical weather and climate data;
obtaining (104) empirical measurement data about the forest stands, the empirical measurement data comprising harvester machine data from harvester operations comprising location information about individual trees;
dividing (106) the forest stands into a grid (400) composed of geographically non-overlapping cells, each cell being bound by geographic coordinates, the grid (400) comprising a plurality of grid layers (400A, 400B, 400C, 400T), wherein each grid layer is associated with the same set of geographically non-overlapping cells;
determining (108) values (T_{1,1}, T_{1,2}, T_{2,1}, T_{2,2}) of a forest stand target attribute (T) measurable based on the empirical measurement data for a first set of cells (402T_{1,1}, 402T_{1,2}, 402T_{2,1}, 402T_{2,2}) of a grid layer (400T) based on the empirical measurement data, the first set of cells (402T_{1,1}, 402T_{1,2}, 402T_{2,1}, 402T_{2,2}) being a subset of all cells of the grid layer (400T), the determining comprising attributing empirical measurement data associated with a specific geographical location to a respective cell covering the specific geographical location, wherein the forest stand target attribute (T) comprises one of: distribution of tree species, distribution of wood classes, distribution of log classes, saw log quality, pulp wood quality, and forest growth rate;
determining (110) values (A_{1,1}, A_{1,2}, A_{2,1}, A_{2,2}, B_{1,1}, B_{1,2}, B_{2,1}, B_{2,2}, C_{1,1}, C_{1,2}, C_{2,1}, C_{2,2}) of a plurality of input variables (A, B, C) for a second set of cells (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) of the remaining grid layers (400A, 400B, 400C) based on the direct indicator data and the indirect indicator data so that cells of each remaining grid layer (400A, 400B, 400C) comprise values associated with the corresponding same input variable, the second set of cells (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) geographically corresponding to the first set of cells (402T_{1,1}, 402T_{1,2}, 402T_{2,1}, 402T_{2,2});
converting (112) the grid layers (400A, 400B, 400C, 400T) to grid-specific feature vectors (406A, 406B, 406C, 406D) so that each grid-specific feature vector (406A, 406B, 406C, 406D) corresponds to a single cell of the grid;
applying (114) an error minimizing non-linear machine learning algorithm for the forest stand target attribute (T) to generate a trained model for the forest stand target attribute (T) based on the grid-specific feature vectors (406A, 406B, 406C, 406D);
determining values of the plurality of input variables (A, B, C) for cells of the remaining grid layers (400A, 400B, 400C) covering the same geographical area based on the direct indicator data and the indirect indicator data;
constructing an input feature vector (600) based on the values of the plurality of input variables (A, B, C) for the cells of the remaining grid layers (400A, 400B, 400C) covering the same geographical area; and
predicting the value of the forest stand target attribute (T) for the cell of the grid layer (400T) covering the same geographical area as the cells of the remaining grid layers (400A, 400B, 400C) based on the input feature vector (600) and the trained model for the forest stand target attribute (T).

2. A computer-implemented method according to claim 1, further comprising:
predicting the value of the forest stand target attribute (T) for each cell of a forest stand; and
calculating a forest stand-level value of the forest stand target attribute (T) based on the values of the forest stand target attribute (T) for all cells of the forest stand.

3. A computer-implemented method according to any of claims 1 - 2, wherein a cell comprises a plurality of sub-cells, and the method further comprises:
calculating a value associated with an input variable for a cell based on values associated with an input variable for the plurality of sub-cells of the cell.

4. A computer-implemented method according to claim 3, wherein calculating the value associated with the input variable by using a convolutional neural network, statistical aggregation or filters combined with aggregation.

5. A computer-implemented method according to any of claims 1 - 4, wherein the indirect indicator data comprises time series for each of N input variables for a cell, and the method further comprises:
calculating an optimal aggregation function for computing a single derived input variable value from a subset of up to N input variables from time series of these input variables for each cell, so that the aggregation function maximizes a correlation between the single derived input variable and the forest stand target attribute; and
applying the aggregation function to all cells of the grid for computing a derived input grid layer.

6. A computer-implemented method according to any of claims 1 - 5, further comprising:
transforming forest stand level empirical measurement data to grid-level estimates of the forest stand level empirical measurement data.

7. A computer-implemented method according to any of claims 1 - 6, further comprising:
predicting, for the forest stands, values of at least one forest stand target attribute (T) based on the trained models for the forest stand target attributes (T); and
applying at least one search criterion to find at least one forest stand matching the at least one search criterion.

8. A computer-implemented method according to any of claims 1 - 7, wherein the forest stand target attribute (T) comprises one of: volume per hectare, basal area, average diameter, average diameter at breast height, average height, average volume per stem, and number of stems per hectare, recommended harvest operation, risk of forest damages by fire, risk of forest damages by storm, and risk of forest damages by pests.

9. A system (800) for predicting a forest stand target attribute, the system (800) comprising:
at least one processing unit (802);
at least one memory (804);
wherein the at least one memory (804) stores program instructions that, when executed by the at least one processing unit (802), cause the system (800) to perform the method of any of claims 1 - 8.

10. A computer program comprises program code which, when executed by at least one processor, causes the processor to perform the method of any of claims 1 - 8.

11. A computer-readable medium comprising a computer program comprising program code which, when executed by at least one processor, causes the processor to perform the method of any of claims 1 - 8.

## Patentansprüche

1. Computerimplementiertes Verfahren zur Vorhersage eines Zielattributs eines Waldbestands, das Verfahren umfassend:
Erhalten (100) von Daten direkter Indikatoren über Waldbestände, wobei die Daten direkter Indikatoren Satellitenbilddaten und mindestens entweder Luftlaserabtastdaten oder Daten von Radarsatelliten mit kleiner Apertur umfassen;
Erhalten (102) von Daten indirekter Indikatoren über die Waldbestände, wobei diese Daten zur Erklärung des Baumwachstums in den Waldbeständen beitragen und mindestens eine der folgenden Arten umfassen: forstwirtschaftliche Daten, geografische Daten, geologische Daten sowie historische Wetter- und Klimadaten;
Erhalten (104) empirischer Messdaten über die Waldbestände, wobei die empirischen Messdaten Daten von Erntemaschinen aus Erntevorgängen umfassen, die Standortinformationen zu einzelnen Bäumen enthalten;
Aufteilen (106) der Waldbestände in ein Gitter (400), das aus geografisch nicht überlappenden Zellen zusammengesetzt ist, wobei jede Zelle durch geografische Koordinaten begrenzt ist und das Gitter (400) eine Vielzahl von Gitterschichten (400A, 400B, 400C, 400T) umfasst, wobei jede Gitterschicht demselben Satz geografisch nicht überlappender Zellen zugeordnet ist;
Ermitteln (108) von Werten (T_{1,1}, T_{1,2}, T_{2,1}, T_{2,2}) eines Zielattributs (T) eines Waldbestands, die auf der Grundlage der empirischen Messdaten für eine erste Gruppe von Zellen (402T_{1,1}, 402T_{1,2}, 402T_{2,1}, 402T_{2,2}) einer Gitterschicht (400T) auf der Grundlage der empirischen Messdaten messbar sind, wobei der erste Satz von Zellen (402T_{1,1}, 402T_{1,2}, 402T_{2,1}, 402T_{2,2}) eine Teilmenge aller Zellen der Gitterschicht (400T) darstellt, wobei das Ermitteln das Zuordnen empirischer Messdaten, die mit einem bestimmten geografischen Standort verbunden sind, zu einer jeweiligen Zelle umfasst, die den bestimmten geografischen Standort abdeckt, wobei das Zielattribut (T) des Waldbestands eines der folgenden Elemente umfasst: Verteilung der Baumarten, Verteilung der Holzklassen, Verteilung der Rundholzklassen, Qualität des Schnittholzes, Qualität des Zellstoffholzes und Waldwachstumsrate;
Ermitteln (110) von Werten (A_{1,1}, A_{1,2}, A_{2,1}, A_{2,2}, B_{1,1}, B_{1,2}, B_{2,1}, B_{2,2}, C_{1,1}, C_{1,2}, C_{2,1}, C_{2,2}) einer Vielzahl von Eingangsvariablen (A, B, C) für einen zweiten Satz von Zellen (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) der verbleibenden Gitterschichten (400A, 400B, 400C) auf der Grundlage der Daten direkter Indikatoren und der Daten indirekter Indikatoren, so dass die Zellen jeder verbleibenden Gitterschicht (400A, 400B, 400C) Werte umfassen, die der jeweils entsprechenden Eingangsvariablen zugeordnet sind, wobei der zweite Satz von Zellen (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) geografisch der ersten Gruppe von Zellen (402T_{1,1}, 402T_{1,2}, 402T_{2,1}, 402T_{2,2}) entspricht;
Umwandeln (112) der Gitterschichten (400A, 400B, 400C, 400T) in gitterspezifische Merkmalsvektoren (406A, 406B, 406C, 406D), sodass jeder gitterspezifische Merkmalsvektor (406A, 406B, 406C, 406D) einer einzelnen Zelle des Gitters entspricht;
Anwenden (114) eines fehlerminimierenden nichtlinearen Algorithmus des maschinellen Lernens auf das Zielattribut (T) des Waldbestands, um auf der Grundlage der gitterspezifischen Merkmalsvektoren (406A, 406B, 406C, 406D) ein trainiertes Modell für das Zielattribut (T) des Waldbestands zu generieren;
Ermitteln der Werte der mehreren Eingangsvariablen (A, B, C) für Zellen der übrigen Gitterschichten (400A, 400B, 400C), die dasselbe geografische Gebiet abdecken, auf der Grundlage der Daten direkter Indikatoren und der Daten indirekter Indikatoren;
Erstellen eines Eingangsmerkmalsvektors (600) auf der Grundlage der Werte der mehreren Eingangsvariablen (A, B, C) für die Zellen der verbleibenden Gitterschichten (400A, 400B, 400C), die dasselbe geografische Gebiet abdecken; und
Vorhersagen des Werts des Zielattributs des Waldbestands (T) für die Zelle der Gitterschicht (400T), die denselben geografischen Bereich abdeckt wie die Zellen der verbleibenden Gitterschichten (400A, 400B, 400C), auf der Grundlage des Eingangsmerkmalsvektors (600) und des trainierten Modells für das Zielattribut des Waldbestands (T).

2. Computerimplementiertes Verfahren nach Anspruch 1, weiter umfassend:
Vorhersagen des Wertes des Zielattributs (T) des Waldbestands für jede Zelle eines Waldbestands; und
Berechnen eines Wertes auf Bestandsniveau für das Zielattribut (T) des Waldbestands auf der Grundlage der Werte des Zielattributs (T) für alle Zellen des Waldbestands.

3. Computerimplementiertes Verfahren nach einem der Ansprüche 1 - 2, wobei eine Zelle eine Vielzahl von Unterzellen umfasst und das Verfahren weiter umfasst:
Berechnen eines Wertes, der einer Eingangsvariablen für eine Zelle zugeordnet ist, auf der Grundlage von Werten, die einer Eingangsvariablen für die mehreren Unterzellen der Zelle zugeordnet sind.

4. Computerimplementiertes Verfahren nach Anspruch 3, wobei der der Eingangsvariablen zugeordnete Wert unter Verwendung eines Faltungsneuronalen Netzes, einer statistischen Aggregation oder von Filtern in Kombination mit einer Aggregation berechnet wird.

5. Computerimplementiertes Verfahren nach einem der Ansprüche 1 - 4, wobei die Daten indirekter Indikatoren Zeitreihen für jede der N Eingangsvariablen einer Zelle umfassen und das Verfahren weiter umfasst:
Berechnen einer optimalen Aggregationsfunktion zur Ermittlung eines einzelnen abgeleiteten Eingangswerts aus einer Teilmenge von bis zu N Eingangsvariablen aus Zeitreihen dieser Eingangsvariablen für jede Zelle, sodass die Aggregationsfunktion die Korrelation zwischen der einzelnen abgeleiteten Eingangsvariablen und dem Zielattribut des Waldbestands maximiert; und
Anwenden der Aggregationsfunktion auf alle Zellen des Gitters zur Berechnung einer abgeleiteten Eingangsgitterschicht.

6. Computerimplementiertes Verfahren nach einem der Ansprüche 1 - 5, weiter umfassend:
Umwandeln empirischer Messdaten auf Bestandesebene in Schätzungen dieser Daten auf Gitterebene.

7. Computerimplementiertes Verfahren nach einem der Ansprüche 1 - 6, weiter umfassend:
Vorhersage von Werten für mindestens ein Zielattribut (T) eines Waldbestands auf der Grundlage der trainierten Modelle für die Zielattribute (T) des Waldbestands; und
Anwenden mindestens eines Suchkriteriums, um mindestens einen Waldbestand zu finden, der diesem mindestens einen Suchkriterium entspricht.

8. Computerimplementiertes Verfahren nach einem der Ansprüche 1 - 7, wobei das Zielattribut (T) des Waldbestands eines der folgenden Elemente umfasst: Volumen pro Hektar, Grundfläche, Durchschnittsdurchmesser, Durchschnittsdurchmesser in Brusthöhe, Durchschnittshöhe, durchschnittliches Stammvolumen und Anzahl der Stämme pro Hektar, empfohlene Ernteverfahren, Risiko von Waldschäden durch Feuer, Risiko von Waldschäden durch Sturm und Risiko von Waldschäden durch Schädlinge.

9. System (800) zur Vorhersage eines Zielattributs eines Waldbestands, das System (800) umfassend:
zumindest eine Verarbeitungseinheit (802);
zumindest einen Speicher (804);
wobei der mindestens eine Speicher (804) Programmbefehle speichert, die, wenn sie von der mindestens einen Verarbeitungseinheit (802) ausgeführt werden, bewirken, dass das System (800) das Verfahren nach einem der Ansprüche 1 bis 8 ausführt.

10. Computerprogramm umfassend Programmcode, der, wenn er von mindestens einem Prozessor ausgeführt wird, bewirkt, dass der Prozessor das Verfahren nach einem der Ansprüche 1 bis 8 ausführt.

11. Computerlesbares Medium, das ein Computerprogramm umfasst, welches Programmcode umfasst, der, wenn er von mindestens einem Prozessor ausgeführt wird, bewirkt, dass der Prozessor das Verfahren nach einem der Ansprüche 1 bis 8 ausführt.

## Revendications

1. Procédé mis en œuvre par ordinateur pour prédire un attribut cible de peuplement forestier, le procédé comprenant :
l'obtention (100) de données d'indicateur direct concernant des peuplements forestiers, les données d'indicateur direct comprenant des données d'image satellite et au moins l'une parmi des données de balayage laser aéroporté ou des données de satellite radar à petite ouverture ;
l'obtention (102) de données d'indicateur indirect concernant les peuplements forestiers, les données d'indicateur indirect fournissant des données qui aident à expliquer la croissance des arbres dans les peuplements forestiers, les données d'indicateur indirect comprenant au moins l'une parmi des données sylvicoles, des données géographiques, des données géologiques, des données météorologiques et climatiques historiques ;
l'obtention (104) de données de mesure empirique concernant les peuplements forestiers, les données de mesure empirique comprenant des données de machine d'abattage-ébranchage provenant d'opérations d'abattage-ébranchage comprenant des informations de localisation concernant des arbres individuels ;
la division (106) des peuplements forestiers en une grille (400) composée de cellules géographiquement non chevauchantes, chaque cellule étant délimitée par des coordonnées géographiques, la grille (400) comprenant une pluralité de couches de grille (400A, 400B, 400C, 400T), dans lequel chaque couche de grille est associée au même ensemble de cellules géographiquement non chevauchantes ;
la détermination (108) de valeurs (T_{1,1}, T_{1,2}, T_{2,1}, T_{2,2}) d'un attribut cible de peuplement forestier (T) mesurable sur la base des données de mesure empirique pour un premier ensemble de cellules (402T_{1,1}, 402T_{1,2}, 402T_{2,1}, 402T_{2,2}) d'une couche de grille (400T) sur la base des données de mesure empirique, le premier ensemble de cellules (402T_{1,1}, 402T_{1,2}, 402T_{2,1}, 402T_{2,2}) étant un sous-ensemble de toutes les cellules de la couche de grille (400T), la détermination comprenant l'attribution de données de mesure empirique associées à un emplacement géographique spécifique à une cellule respective couvrant l'emplacement géographique spécifique, dans lequel l'attribut cible de peuplement forestier (T) comprend l'un parmi : une répartition d'espèces d'arbres, une répartition de classes de bois, une répartition de classes de troncs, qualité de billots de sciage, qualité de pâte de bois, et un taux de croissance du peuplement forestier ;
la détermination (110) de valeurs (A_{1,1}, A_{1,2}, A_{2,1}, A_{2,2}, B_{1,1}, B_{1,2}, B_{2,1}, B_{2,2}, C_{1,1}, C_{1,2}, C_{2,1}, C_{2,2}) d'une pluralité de variables d'entrée (A, B, C) pour un deuxième ensemble de cellules (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) des couches de grille restantes (400A, 400B, 400C) sur la base des données d'indicateur direct et des données d'indicateur indirect de sorte que des cellules de chaque couche de grille restante (400A, 400B, 400C) comprennent des valeurs associées à la même variable d'entrée correspondante, le deuxième ensemble de cellules (402A_{1,1}, 402A_{1,2}, 402A_{2,1}, 402A_{2,2}, 402B_{1,1}, 402B_{1,2}, 402B_{2,1}, 402B_{2,2}, 402C_{1,1}, 402C_{1,2}, 402C_{2,1}, 402C_{2,2}) correspondant géographiquement au premier ensemble de cellules (402T_{1,1}, 402T_{1,2}, 402T_{2,1}, 402T_{2,2}) ;
la conversion (112) des couches de grille (400A, 400B, 400C, 400T) en vecteurs de caractéristiques spécifiques à la grille (406A, 406B, 406C, 406D) de sorte que chaque vecteur de caractéristiques spécifique à la grille (406A, 406B, 406C, 406D) corresponde à une seule cellule de la grille ;
l'application (114) d'un algorithme d'apprentissage automatique non linéaire minimisant l'erreur pour l'attribut cible de peuplement forestier (T) pour générer un modèle entraîné pour l'attribut cible de peuplement forestier (T) sur la base des vecteurs de caractéristiques spécifiques à la grille (406A, 406B, 406C, 406D) ;
la détermination de valeurs de la pluralité de variables d'entrée (A, B, C) pour des cellules des couches de grille restantes (400A, 400B, 400C) couvrant la même zone géographique sur la base des données d'indicateur direct et des données d'indicateur indirect ;
la construction d'un vecteur de caractéristiques d'entrée (600) sur la base des valeurs de la pluralité de variables d'entrée (A, B, C) pour les cellules des couches de grille restantes (400A, 400B, 400C) couvrant la même zone géographique ; et
la prédiction de la valeur de l'attribut cible de peuplement forestier (T) pour la cellule de la couche de grille (400T) couvrant la même zone géographique que les cellules des couches de grille restantes (400A, 400B, 400C) sur la base du vecteur de caractéristiques d'entrée (600) et du modèle entraîné pour l'attribut cible de peuplement forestier (T).

2. Procédé mis en œuvre par ordinateur selon la revendication 1, comprenant en outre :
la prédiction de la valeur de l'attribut cible de peuplement forestier (T) pour chaque cellule d'un peuplement forestier ; et,
le calcul d'une valeur au niveau du peuplement forestier de l'attribut cible de peuplement forestier (T) sur la base des valeurs de l'attribut cible de peuplement forestier (T) pour toutes les cellules du peuplement forestier.

3. Procédé mis en œuvre par ordinateur selon l'une quelconque des revendications 1 à 2, dans lequel une cellule comprend une pluralité de sous-cellules, et le procédé comprend en outre :
le calcul d'une valeur associée à une variable d'entrée pour une cellule sur la base de valeurs associées à une variable d'entrée pour la pluralité de sous-cellules de la cellule.

4. Procédé mis en œuvre par ordinateur selon la revendication 3, dans lequel la valeur associée à la variable d'entrée est calculée en utilisant un réseau neuronal convolutif, une agrégation statistique ou des filtres combinés avec une agrégation.

5. Procédé mis en œuvre par ordinateur selon l'une quelconque des revendications 1 à 4, dans lequel les données d'indicateur indirect comprennent des séries temporelles pour chacune de N variables d'entrée pour une cellule, et le procédé comprend en outre :
le calcul d'une fonction d'agrégation optimale pour calculer une valeur de variable d'entrée dérivée unique à partir d'un sous-ensemble d'au plus N variables d'entrée provenant de séries temporelles de ces variables d'entrée pour chaque cellule, de sorte que la fonction d'agrégation maximise une corrélation entre la variable d'entrée dérivée unique et l'attribut cible de peuplement forestier ; et
l'application de la fonction d'agrégation à toutes les cellules de la grille pour calculer une couche de grille d'entrée dérivée.

6. Procédé mis en œuvre par ordinateur selon l'une quelconque des revendications 1 à 5, comprenant en outre :
la transformation de données de mesure empirique au niveau du peuplement forestier en estimations au niveau de la grille des données de mesure empirique au niveau du peuplement forestier.

7. Procédé mis en œuvre par ordinateur selon l'une quelconque des revendications 1 à 6, comprenant en outre :
la prédiction, pour les peuplements forestiers, de valeurs d'au moins un attribut cible de peuplement forestier (T) sur la base des modèles entraînés pour les attributs cibles de peuplement forestier (T) ; et
l'application d'au moins un critère de recherche pour trouver au moins un peuplement forestier correspondant à l'au moins un critère de recherche.

8. Procédé mis en œuvre par ordinateur selon l'une quelconque des revendications 1 à 7, dans lequel l'attribut cible de peuplement forestier (T) comprend l'un parmi : un volume par hectare, une surface de base, un diamètre moyen, un diamètre moyen à hauteur de poitrine, une hauteur moyenne, un volume moyen par tige, et un nombre de tiges par hectare, une opération d'abattage/ébranchage recommandée, un risque de dommages forestiers dus au feu, un risque de dommages forestiers dus à la tempête, et un risque de dommages forestiers dus aux parasites.

9. Système (800) pour prédire un attribut cible de peuplement forestier, le système (800) comprenant :
au moins une unité de traitement (802) ;
au moins une mémoire (804) ;
dans lequel l'au moins une mémoire (804) stocke des instructions de programme qui, lorsqu'elles sont mises en œuvre par au moins une unité de traitement (802), amènent le système (800) à réaliser le procédé selon l'une quelconque des revendications 1 à 8.

10. Programme informatique comprenant un code de programme qui, lorsqu'il est mis en œuvre par au moins un processeur, amène le processeur à réaliser le procédé selon l'une quelconque des revendications 1 à 8.

11. Support lisible par ordinateur comprenant un programme informatique comprenant un code de programme qui, lorsqu'il est mis en œuvre par au moins un processeur, amène le processeur à réaliser le procédé selon l'une quelconque des revendications 1 à 8.
